# EUROPEAN PATENT APPLICATION

(11) **EP 4 580 124 A1**
(43) Date of publication of application: **02.07.2025**
(21) Application number: 24220460.0
(22) Date of filing: 17.12.2024
(51) Int. Cl.: H04L 9/40, H04L 67/1021, H04W 36/32

(54) **RELATIONSHIP MODELING FOR NETWORK ADDRESS DOMAINS**

(30) Priority: 27.12.2023 US 202318397189
(71) Applicant: eBay Inc., San Jose, CA 95125 (US)
(72) Inventor: PATIL, Yogesh Yashwant, Davis, 95618 (US)
(74) Representative: Müller-Boré & Partner Patentanwälte PartG mbB

(57) **Abstract**

Generating an access point certificate based on a graph that defines relationships between an access point and at least one domain is described. A computing device may generate a graph that defines relationships between a domain and multiple different access points including a serving access point and one or more fallback access points. A device may generate a certificate for accessing data via the domain based on the relationships between the domain and the one or more fallback access points. A device may control access to the data using the certificate. The graph may define a relationship between a network address, an access point, and one or more records associated with at least one domain. Further, the graph may define a first relationship between a network address and a record associated with a domain and a second relationship between the network address and an alias record associated with the domain.

## Description

### BACKGROUND

One or more computing devices utilize communication infrastructures to facilitate exchange of data among the computing devices. A communication infrastructure may include a device, application, or service that is a source or destination for a data transmission within a network, referred to as an endpoint. An example endpoint includes a web service application. The communication infrastructure assigns an access point to the endpoint for the computing devices to interact with the endpoint. The access point is a physical or virtual location that provides for the computing devices to connect to the endpoint.

A critical aspect in facilitating data transfer is trust, which is established between endpoints (e.g., a client device and a web service application) when accessing data via an access point. Trust is often established by a secure communication protocol to ensure legitimacy of transferred data, such as by using certificates signed by a trusted authority.

### SUMMARY

Techniques are described for generating an access point certificate based on a graph that defines relationships between one or more access points and at least one domain associated with the access point (e.g., domains and subdomains associated with a network address accessible by computing devices, applications, and so forth). The techniques described herein are implemented using methods, systems, computer-readable storage media, and combinations thereof. Relationship data describing how data is to be routed between an access point and domains (e.g., via at least one origin server hosting the data, at least one proxy for an origin server, and so forth) is received by a certificate management system. The relationship data may include how data is to be routed if an access point experiences a disruption to service. The certificate management system (e.g., implemented at or by one or more computing devices) generates an access point graph that represents an access point, network addresses, domains, subdomains thereof, origin servers, proxies, records, and so forth as nodes in the graph, with edges connecting various nodes to model relationships between a network address and various domains.

Using the access point graph, a certificate is generated for the access point that individually lists each domain and subdomain associated with the access point and includes information describing a routing for data traffic between the access point and domain or subdomain. In this manner, the access point certificate is generated without wildcard entries representing multiple domains or multiple subdomains via a single entry. The certificate is used to control data communication traffic via the access point and/or a network address and is continuously updated responsive to changes in in domain relationship data for the access point.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures. In some implementations, entities represented in the figures are indicative of one or more entities and thus reference is made interchangeably to single or plural forms of the entities in the discussion.
FIG. 1 is an illustration of an environment in an example implementation that is operable to employ a certificate management system to generate certificates for an access point based on a graph of domain relationship data for the access point.
FIG. 2 depicts an example of a graph of domain relationship data used by the certificate management system of FIG. 1 to generate a certificate for an access point.
FIG. 3 depicts an example of a different graph of domain relationship data used by the certificate management system of FIG. 1 to generate a different certificate for an access point.

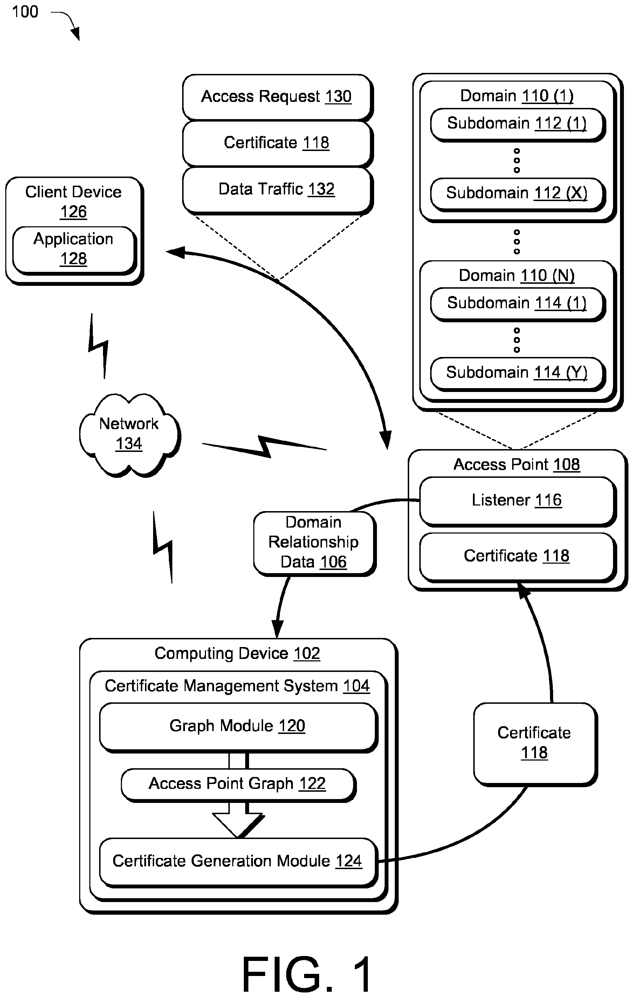

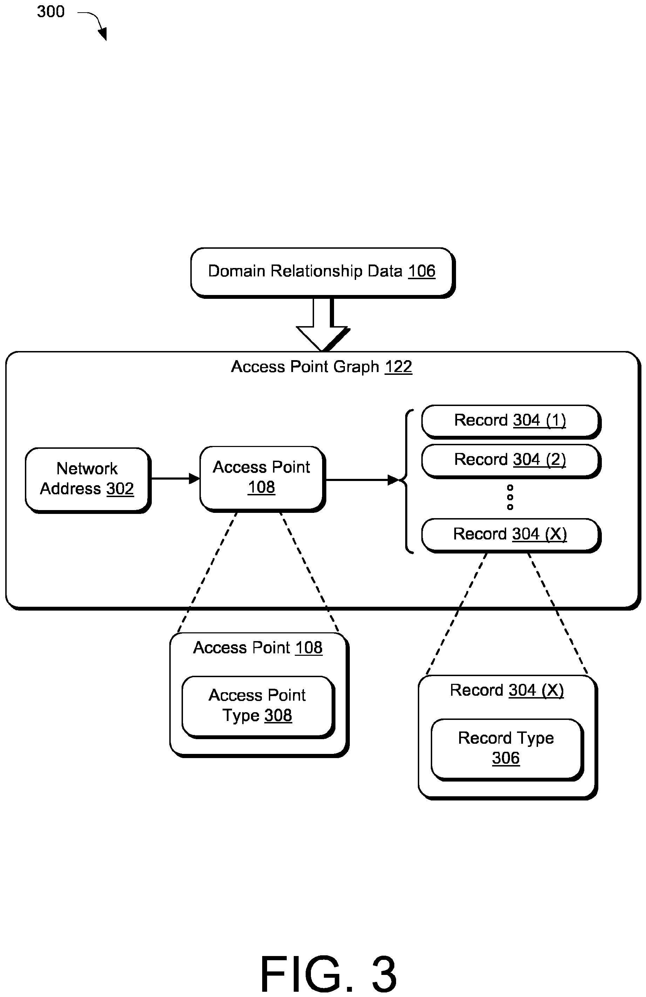

FIG. 3 depicts an example of a different graph of domain relationship data used by the certificate management system of FIG. 1 to generate a different certificate for an access point.

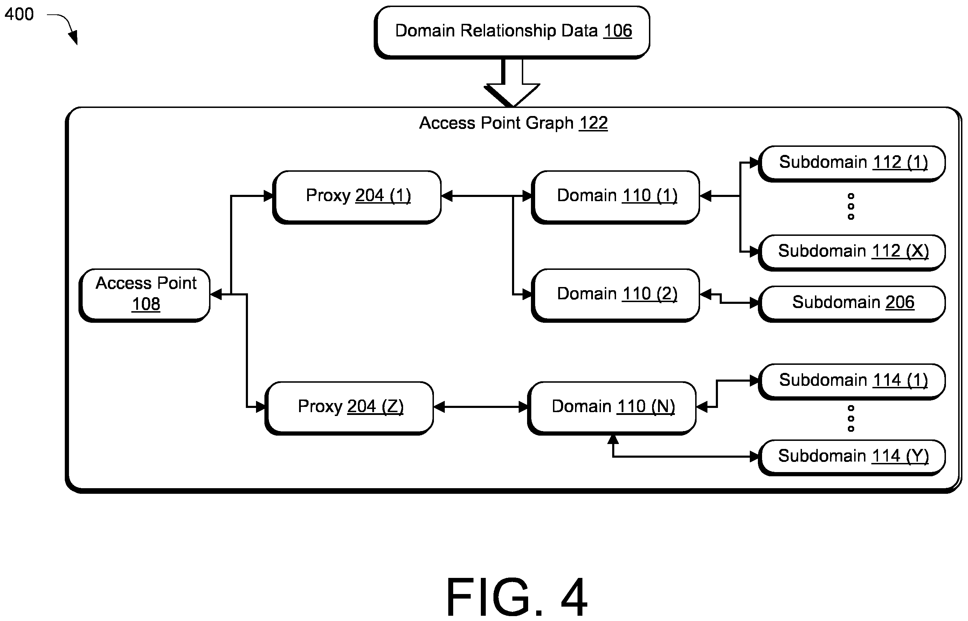

FIG. 4 depicts an example of a different graph of domain relationship data used by the certificate management system of FIG. 1 to generate a different certificate for an access point.

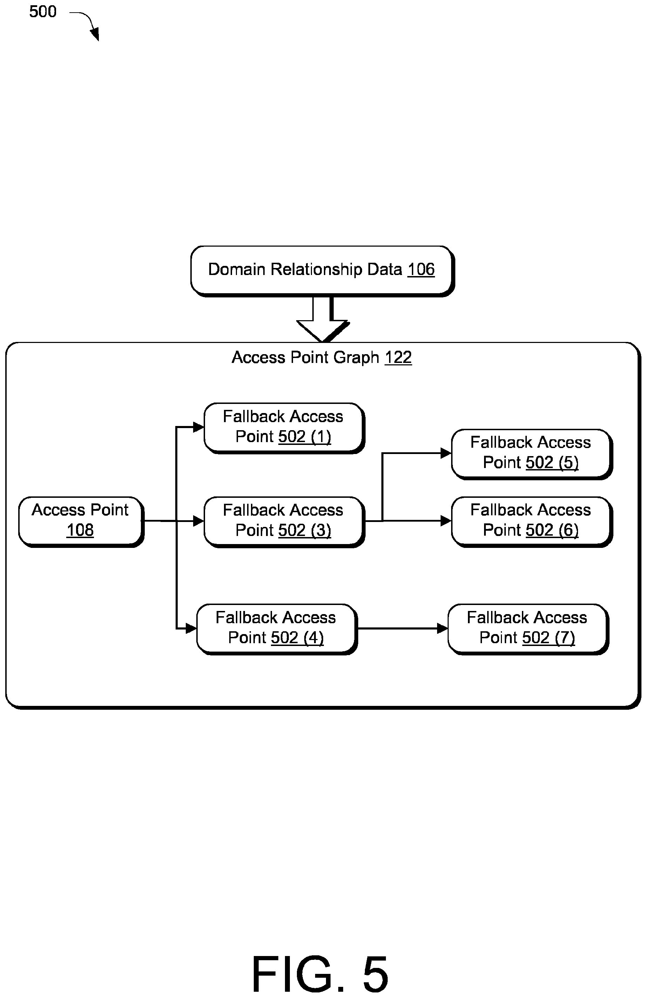

FIG. 5 depicts an example of a different graph of domain relationship data used by the certificate management system of FIG. 1 to generate a different certificate for an access point.

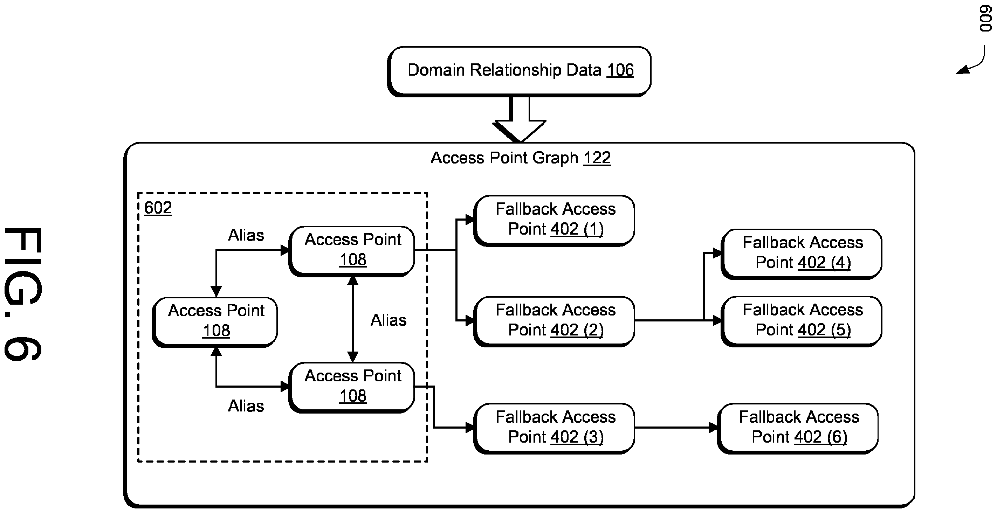

FIG. 6 depicts an example of a different graph of domain relationship data used by the certificate management system of FIG. 1 to generate a different certificate for an access point.

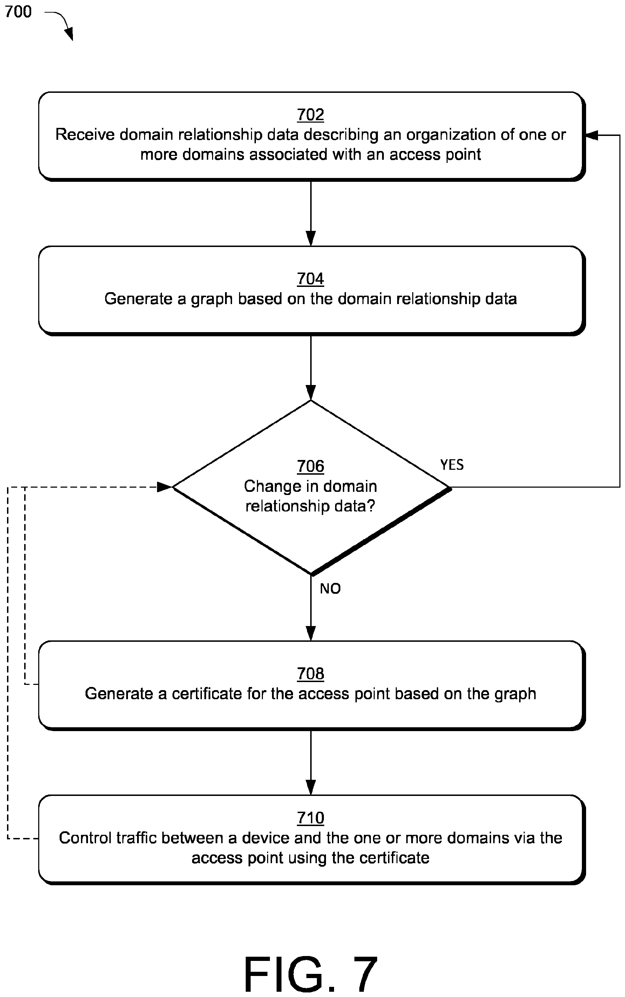

FIG. 7 is a flow diagram depicting a procedure in an example implementation in which the certificate management system of FIG. 1 generates a certificate for an access point based on a graph of domain relationship data for the access point.

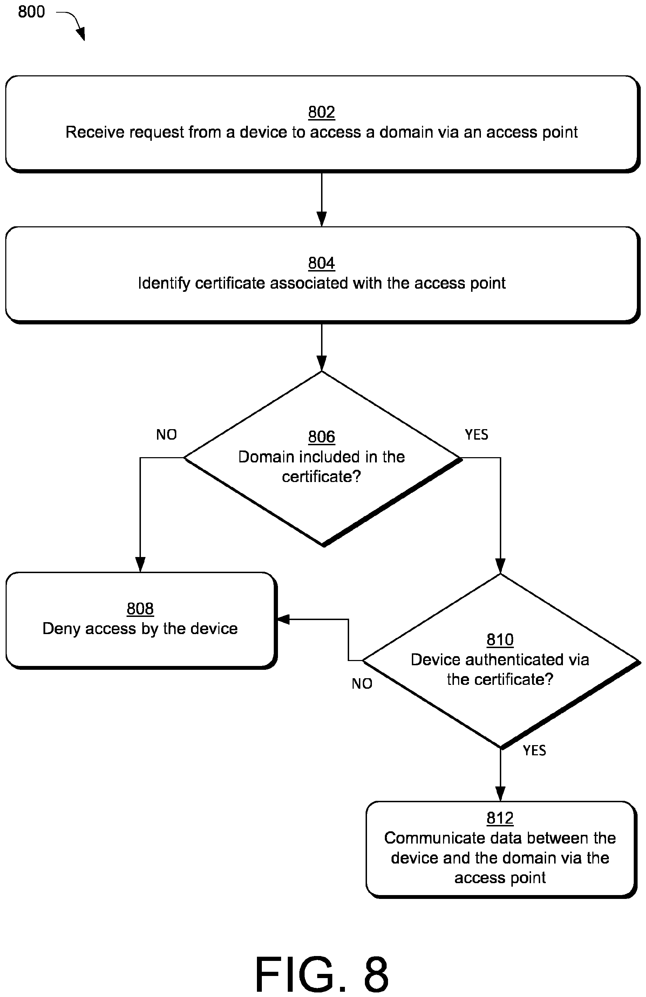

FIG. 8 is a flow diagram depicting a procedure in an example implementation in which a certificate generated by the certificate management system of FIG. 1 is used to control data communication via an access point.

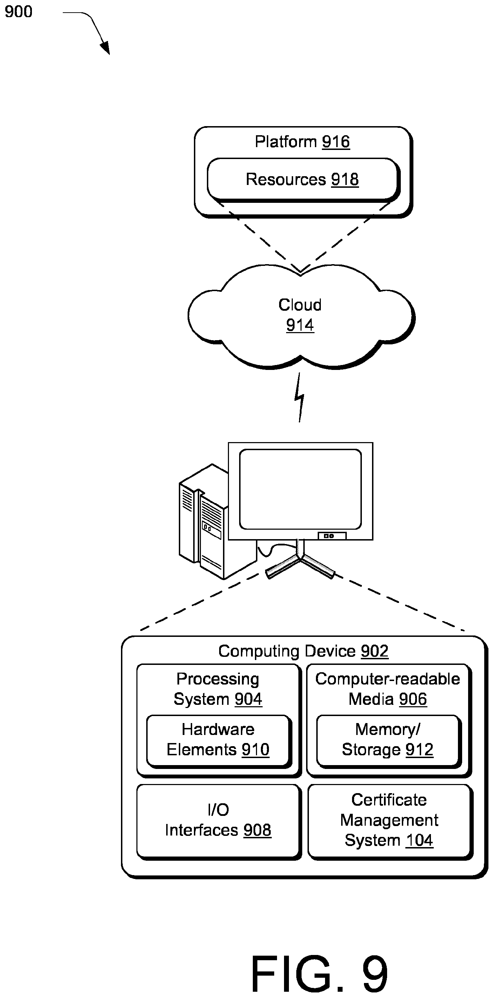

FIG. 9 illustrates an example system including various components of an example device to implement the techniques described with reference to FIGS. 1-5.

### DETAILED DESCRIPTION

### Overview

A computing device may implement digital certificates to secure communication over a network. For example, the computing device may utilize a digital certificate to verify the authenticity of an entity (e.g., a web service application or server) and/or to establish encrypted connections. To obtain a certificate, an entity may inform a trusted certificate provider, referred to as a certificate authority, of an intent to host a service. In variations, if the service is a web service application, the entity may inform the certificate authority of the web service application using a domain name of the web service application (e.g., www.example.com). The entity may request the certificate authority to issue a certificate that authorizes data communication via an access point, such that the data communication can be trusted by client devices accessing the web service application via the access point. The certificate authority generates a certificate that is used to secure communication between a client device and a domain with the specified domain name via the access point. In variations, the certificate includes information about the domain (e.g., an entity associated with the domain, its public key, a validity period, and so forth).

In some examples, one or more web service applications implement a Domain Name System (DNS) topology to manage the translation of human-readable domain names (e.g., www.example.com) into internet protocol (IP) addresses representative of a domain. The DNS topology includes, but is not limited to, a root domain at a highest level in a hierarchy, as well as top-level domains (TLDs) below the root domain. For an example domain name "www.example.com," "example.com," is a root domain, ".com" is a TLD. A system implementing the DNS topology includes one or more servers for storing and accessing the domain information, such as DNS servers that store the domain information and proxies that serve as intermediate servers between client devices accessing the domain information and the DNS servers. As DNS topology increases in scale, the organization and structure of DNS servers, proxies, and client devices accessing domains hosted on the DNS servers becomes increasingly complex and harder to manage.

To accommodate this increase in DNS scale, Subject Alternative Names (SAN) are often implemented to provide for a single certificate to be used for multiple domain names or subdomains associated with an access point. For instance, a certificate for an entity that includes different domains and subdomains that can be accessed via a common access point includes a SAN list of the different domains and subdomains. Unused domain names (e.g., domain names that were previously used by an entity but are no longer in use) are not conventionally removed from certificate SAN lists, which results in bloated SAN lists that include domain names not actively in use.

This problem is further compounded when entities introduce multiple region-specific (e.g., country, or other geographic location-specific) domain names, such as example.com.uk for the United Kingdom and example.com.de for Germany and implement proxies to handle traffic via the access point and one or more servers on which domain data is stored. For instance, due to different rules regarding data traffic for different regions, entities experience a significant increase in network traffic, both within an entity's own infrastructure and at the proxy level. As an example of a proxy level, entities frequently employ Content Delivery Networks (CDNs), which improve the performance, availability, and security of websites, applications, and other domain data by distributing data across multiple servers located in various geographic locations. A CDN proxy, also referred to as a Hypertext Transfer Protocol (HTTP) proxy or reverse proxy, acts as an intermediary between a client device and an origin server that hosts content and/services associated with a domain name. In implementations where an entity uses CDN proxies, when a client device requests content from a website or application, the CDN proxy handles the request and determines the most efficient way to serve the content.

For instance, when a CDN proxy receives a request for content, the CDN proxy accesses a cached copy of content stored locally (e.g., in one or more local servers of the CDN proxy). If the content is cached and valid (e.g., not expired), the CDN proxy directly serves the content from the local server. If the requested content is not in the local server or if the content has expired, the CDN proxy fetches the content from an origin server and stores a copy at the local server. In some implementations, the CDN proxy distributes the content to edge servers located in different geographical locations. By strategically positioning edge servers in different regions, in different internet service provider datacenters, and so forth, CDN proxies store content closer to client devices, which reduces latency and ensures faster content delivery. CDN proxies additionally offer load balancing techniques to distribute traffic among edge servers in an efficient manner, thus distributing data traffic and preventing a single endpoint (e.g., server) from being overwhelmed with requests.

Generating certificates that account for various domains, subdomains, origin servers, and CDN proxies associated with a given access point is a cumbersome process, particularly for entities that have numerous (e.g., thousands) of subdomains allocated to different origin servers and proxies, while being associated with a single access point. To account for this increasing scale, conventional certificate generation approaches implement wildcard entries to account for different domains via a single certificate entry. Wildcard entries often use a single character (e.g., "*") to represent multiple subdomains of a single domain. For instance, a certificate wildcard entry of "example.com.*" represents "example.com" as well as "example.com.uk," "example.com.de," "example.com.au," and so forth. Although wildcard entries permit entities to conveniently adjust domain relationships (e.g., add an additional geographic subdomain without modifying a certificate for the domain), wildcard entries present significant security and compliance concerns.

For instance, wildcard entries create an increased attack surface by allowing an impersonator to easily impersonate a subdomain, can obfuscate visibility into security configurations (e.g., Secure Sockets Layer and Transport Layer Security encryptions), exposing multiple servers to a compromised private key of one server, compliance issues, and so forth. These security concerns are further compounded by CDN proxies, where entities that have a large number of subdomains or consistently create and destroy subdomains experience issues managing where the wildcard certificate is installed, leading to situations where servers are incorrectly configured or where an expired or revoked certificate is still being used.

To address these problems facing conventional certificates management, a certificate management system is described that generates a graph defining relationships between access points and at least one domain associated with the access point (e.g., domains and subdomains associated with a network address such as an IP address or a virtual IP address that is accessible by computing devices, applications, and so forth). In the graph, the access point and each associated domain, subdomain, origin server, proxy, etc. as nodes in the graph, with edges connecting various nodes to model relationships between the access point and various domains/subdomains. After constructing the graph, the certificate management system generates a certificate for the access point based on the graph, such that the certificate individually lists each domain and subdomain associated with the access point and includes information describing a routing for data traffic between the access point and domain or subdomain (e.g., via an origin server or a proxy). Advantageously, the certificate is generated independent of (e.g., without) a wildcard entry that represents multiple domains or multiple subdomains via a single entry. In this manner, the certificate generated in accordance with the described techniques does not include a wildcard entry and avoids the security and compliance concerns facing conventional certificates as described above. The certificate is then used to control data communication traffic via the access point.

The certificate management system is configured to receive an indication upon a change in relationship between an access point and one or more domains associated with the access point. In response to the change to the relationship between an access point and one or more domains, the certificate management system generates an updated graph representing the current relationships and generates a new certificate for the access point based on the updated graph. In this manner, certificates are continuously generated for an access point and used to control the flow of data traffic between a client device and at least one domain via the access point.

In one or more examples, computing devices may access an endpoint (e.g., a web service application) from different geographical locations. An access point for the endpoint may be assigned to a geographic region including some, or all, of the geographic locations. For example, an access point may be assigned to a country, where the computing devices are accessing the endpoint from different cities within the country. The access point may lose network connectivity, such as due to a security attack, environmental factors, or other factors, causing delays and interruption of service for the computing devices accessing the endpoint from the geographic region assigned to the access point. Various endpoints implement CDN proxies to handle requests to the endpoint. The access points may have fallback options when an access point loses network connectivity. For example, a fallback access point for an access point assigned to a country may be an access point assigned to a continent including the country, or to a neighboring geographic region. However, the fallback access point may lack information for generation of a certificate for accessing the endpoint.

As described herein, the certificate management system may graph a relationship between a serving access point and one or more fallback access points in addition to graphing the relationships between the serving access point and at least one domain associated with the serving access point. The serving access point may be an initial access point assigned for a client device to access an end point. The portion of the graph that models the relationship between the serving access point and the fallback access points may include one or more nodes and edges, where each node is an access point and the edges connecting various nodes describe the relationship between the serving access point and the fallback access points. For example, if a serving access point experiences a loss in connectivity, the certificate management system may identify a fallback access point that is a child node of a node representative of the serving access point. The graph maintains the relationships between the serving access point and the at least one domain, so the certificate management system may use the relationship information from the graph to generate one or more certificates for accessing the endpoint from the fallback access point. In some examples, the relationship between a serving access point and one or more fallback access points may be dynamic, such that a serving access point may fallback to one or more different access points based on data traffic at the access points or a geographic location of the access points, among other factors. In some cases, the access points in the graph may fallback to a datacenter, such as if the access points experience loss of connectivity concurrently. Said another way, at least one fallback access point includes a datacenter.

In the following discussion, an example environment is described that is configured to employ the techniques described herein. Example procedures are also described that are configured for performance in the example environment as well as other environments. Consequently, performance of the example procedures is not limited to the example environment and the example environment is not limited to performance of the example procedures.

### Example Environment

FIG. 1 is an illustration of a digital medium environment 100 in an example implementation that is operable to employ techniques described herein. As used herein, the term "digital medium environment" refers to the various computing devices and resources utilized to implement the techniques described herein. The digital medium environment 100 includes a computing device 102, which is configurable in a variety of manners.

The computing device 102, for instance, is configurable as a desktop computer, a laptop computer, a mobile device (e.g., assuming a handheld or wearable configuration such as a tablet or mobile phone), and so forth. Thus, the computing device 102 ranges from full resource devices with substantial memory and processor resources (e.g., personal computers, game consoles) to low-resource devices with limited memory and/or processing resources (e.g., mobile devices). Additionally, although described in the context of a single computing device 102, the computing device 102 is representative of a plurality of different devices, such as multiple servers utilized to perform operations "over the cloud."

In the illustrated example, the computing device 102 includes a certificate management system 104. The certificate management system 104 is representative of functionality of the computing device 102 to receive domain relationship data 106 for an access point 108. As described herein, the access point 108 refers to a location where an exchange of data takes place. For instance, in the context of Internet Service Providers (ISPs), the access point 108 is representative of a public exchange facility where ISPs can connect with one another to allow exchange of traffic between different ISP networks, thus enabling data from one ISP's clients to reach clients on another ISP's network. Access points are a critical part of network infrastructures and include physical locations (e.g., datacenters) where different networks, services, and devices are connected to one another via routers, switches, and so forth. In the context of wireless network communications, telecommunications, and so forth, the access point 108 is representative of a device such as a router or a hub that provides connectivity for devices to a network.

In some implementations, the access point 108 is associated with a network address, such as an IP address, a virtual IP address, and so forth, thus representing a device that provides connectivity between different endpoints (e.g., different devices) for data communication. For instance, in implementations where the access point 108 represents a virtual IP address, the access point 108 is accessible by one or more physical network interfaces, one or more devices, or combinations thereof. In some examples, an IP address is assigned to multiple servers or network devices across different locations. An IP address assigned to multiple servers or network devices across different locations may be referred to as an anycast IP address, or in the case of a virtual IP address, an anycast virtual IP address.

In some examples, the certificate management system 104 may receive an anycast IP address from multiple locations and may route, or direct, data traffic to a destination according to routing metrics. The routing metrics may include or may be related to a data load at a destination, a geographic location of the destination, a traffic speed at the destination, among other factors and/or metrics. For anycast IP addresses, incoming data traffic is distributed across multiple access points 108, which improves load distribution and prevents overload at an access point 108. Additionally, or alternatively, distributing incoming data traffic across multiple access points 108 provides redundancy for directing traffic to available access points 108, which may result in improved network latency and overall responsiveness of services for the certificate management system 104.

The domain relationship data 106 is representative of information describing an association between the access point 108 and at least one domain. For instance, in the illustrated example of FIG. 1, access point 108 is depicted as being associated with a plurality of domains, represented as domain 110(1) to domain 110(N), where N represents any integer. Each domain 110 associated with the access point 108 is further depicted as including at least one subdomain. For instance, domain 110(1) is depicted as including subdomain 112(1) to subdomain 112(X) and domain 110(N) is depicted as including subdomain 114(1) to subdomain 114(Y), where X and Y each represent any integer. In an example implementation, each subdomain for a domain represents a different service associated with the domain. Alternatively or additionally, each subdomain is associated with a different geographic region for a domain (e.g., in response to a request to access domain 110(1) from a first geographic location, traffic is routed to subdomain 112(1) and in response to a request to access domain 110(1) from a second geographic location, traffic is routed to subdomain 112(X)). These example usages of different subdomains for a domain are merely illustrative and are not intended to be limiting, as the techniques described herein are extendable to any suitable configuration of domains and subdomains thereof that are associated with access point 108.

In implementations, the access point 108 facilitates access to content hosted on a domain 110 - and/or subdomain thereof, such as a subdomain 112 or a subdomain 114 - by routing data communications between the domain 110 and the access point 108 via one or more intermediary devices. For instance, in a basic implementation, data retrieved from each domain 110 associated with access point 108 is hosted on a single origin server and the access point 108 facilitates data transfer between the origin server and one or more clients (e.g., computing devices, applications, services, combinations thereof, and so forth). In other implementations, data retrieved from different domains 110, subdomains 112, and subdomains 114 is routed via one or more proxies, multiple origin servers, or combinations thereof via the access point to one or more clients. The domain relationship data 106 is further representative of information describing how data is to be routed via the access point 108 from different domains 110, subdomains 112, and subdomains 114 (e.g., directly from an origin sever, via a proxy, and so forth).

In implementations, the domain relationship data 106 is received by the certificate management system 104 from a listener 116 associated with the access point 108. The listener 116 is representative of a component of the access point 108 that identifies configuration settings defining a relationship between the access point 108 and a domain 110, a subdomain 112, a subdomain 114, an origin server, a proxy, or combinations thereof. For instance, the domain relationship data 106 defines how a request for data from a certain subdomain (e.g., subdomain 112(1)) is to be routed from an origin server or a proxy to a client, via the access point 108, from which the request was received.

In implementations, the listener 116 is configured as a software component or a service of the access point 108 that monitors and processes incoming network connections and communication requests at the access point 108. Alternatively or additionally, despite being depicted in the illustrated example of FIG. 1 as being implemented at the access point 108, the listener 116 is implemented remotely from the access point 108. The listener 116 is further representative of functionality to manage incoming connections between clients and the domains 110, based on a certificate 118 associated with the access point 108. Alternatively or additionally, the listener 116 operates as a security mechanism to block or restrict unauthorized connections, such as connections that are not explicitly permitted by the certificate 118.

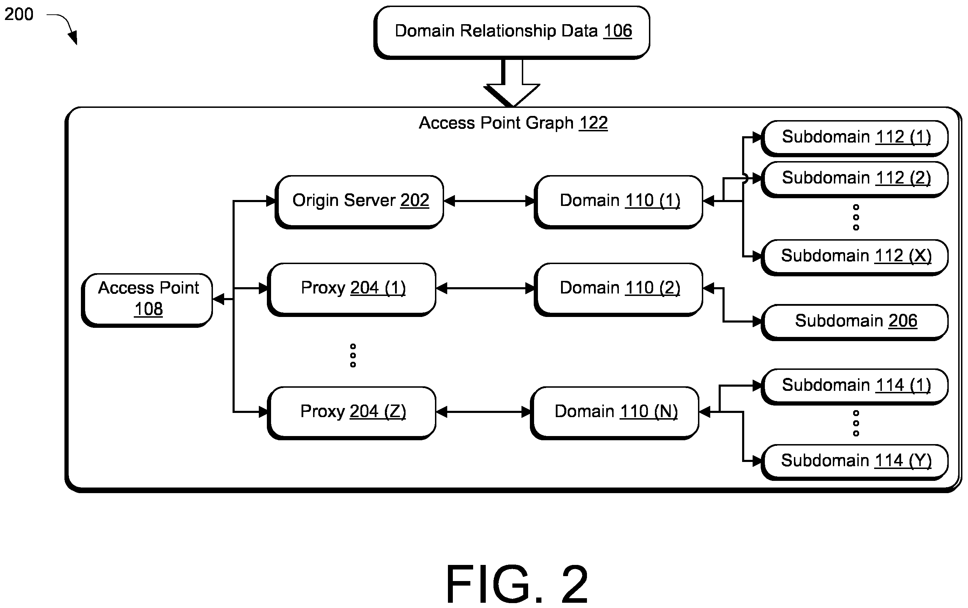

In implementations, the certificate 118 is generated by the certificate management system 104 for the access point 108. To do so, the certificate management system 104 implements a graph module 120 that generates an access point graph 122 based on the domain relationship data 106 for the access point 108. In this manner, the access point graph 122 is representative of a data structure defining relationships between the access point 108, the domains 110, the subdomains 112, and the subdomains 114, as well as any origin servers or proxies implemented by an entity to service access to data and/or services represented by the domains 110, subdomains 112, and subdomains 114. For an example of an access point graph 122, consider FIG. 2.

FIG. 2 depicts an example 200 of a graph of domain relationship data used by the certificate management system 104 to generate the certificate 118 for access point 108. In the illustrated example 200, the access point graph 122 is generated from domain relationship data 106 describing how access point 108 is associated with domain 110(1), domain 110(2), and domain 110(N). The access point graph 122 further represents how domain 1 10(1) is associated with a plurality of subdomains, represented in the illustrated example 200 as subdomain 112(1), subdomain 112(2), and subdomain 112(X). Similarly, the access point graph 122 represents how domain 110(2) is associated with subdomain 206 and how domain 110(N) is associated with a plurality of subdomains, represented as subdomain 114(1) and subdomain 114(Y). The access point graph 122 further includes information describing how the domain 110(1), along with its subdomains 112(1), 112(2), and 112(X) are assigned to origin server 202, such that requests for data from the domain 110(1), and/or the subdomains 112(1)-(X) are routed from the origin server 202 via the access point 108 to a requesting client.

In a similar manner, the access point graph 122 includes information describing how multiple proxies are used to service data from domain 110(2) and domain 110(N), represented in the example 200 by proxy 204(1) and proxy 204(Z). Although only two proxies 204 are depicted in the illustrated example for simplicity, the access point graph 122 is configured to represent any suitable number of proxies, such that Z represents any integer. Thus, the access point graph 122 represents how requests for data from the domain 110(2) and/or the subdomain 206 are routed from the proxy 204(1) via the access point 108 to a requesting client. Similarly, the access point graph 122 represents how requests for data from the domain 110(N) and/or the subdomains 114(1)-(Y) are routed from the proxy 204(Z) via the access point 108 to a requesting client. In this manner, the access point 108 and its associated domains, subdomains, servers, and proxies are each represented in the access point graph 122 as nodes, with edges defining how data traffic is to be routed between endpoints (e.g., a client and a subdomain) via the access point 108.

Returning to FIG. 1, the certificate management system 104 implements a certificate generation module 124 to generate the certificate 118 for the access point 108 based on the access point graph 122 generated by the graph module 120. The certificate generation module 124 generates the certificate 118 by listing each node of the access point graph 122 as a separate entry in the certificate 118. Advantageously, in contrast to conventional approaches that list multiple domains, multiple subdomains, or combinations thereof using a single wildcard entry, the certificate generation module 124 generates the certificate 118 without wildcard entries (e.g., by listing each node of the access point graph 122 as a separate entry in the certificate 118). As such, the certificate 118 does not include one or more wildcard entries. In a similar manner, in contrast to conventional systems that persist stale or extinct domains and/or subdomains in a certificate, the certificate 118 is continuously updated based on changes in domain relationship data 106, as described in further detail below. As such, the certificate 118 describes only current relationships between the access point 108, domains 110, subdomains thereof, origin servers, and proxies that route communications between the access point 108 and the domains 110.

The certificate generation module 124 additionally generates the certificate 118 to include information describing associations between the different nodes. For instance, consider an example scenario where the origin server 202 represents a first provider hosted by an entity and the proxy 204(1) represents a second provider hosted by a content delivery network that is different than the entity. In this example scenario, the certificate 118 is generated to include information describing how the domain 110(1) and the subdomains 112(1)-(X) are linked to the first provider and how the domain 110(2) and the subdomain 206 are linked to the second provider, thus informing the listener 116 as to how incoming access requests are to be routed. In implementations, the certificate generation module 124 additionally includes security information for the access point 108 in the certificate 118, such as a public key for the access point 108, a digital signature of a trusted authority that vouches for the authenticity of the certificate 118, and so forth. In this manner, the certificate management system 104 is representative of a trusted security authority in accordance with one or more implementations.

For instance, the illustrated example of FIG. 1 depicts a scenario where a client device 126 implementing an application 128 (e.g., a web browser, a dedicated application corresponding to a web service application hosted via one or more of the domains 110, and so forth) transmits an access request 130 to the access point 108. The access request 130 is representative of a connection between the client device 126 and the access point 108 using a secure protocol such as HTTPS (e.g., HTTP over TLS/SSL), which initiates a security handshake. For instance, the access request 130 triggers a TLS handshake, which is a known process by which the client device 126 and the access point 108 establish a secure encrypted connection. As part of the TLS handshake, the access point 108 sends the certificate 118 to the client device 126. The client device 126 then validates the certificate 118 using known certificate validation techniques, such as by checking an expiration date of the certificate 118 to ensure validity, by performing a chain of trust verification to ensure that the signature of a trusted authority is valid using a public key of the trusted authority, performing hostname verification with the access point 108, and so forth.

In implementations, performing hostname verification with the access point 108 involves the client device 126 generating a random session key, encrypting the random session key using a public key for the access point 108 included in the certificate 118, and sending the encrypted session key back to the access point 108. The access point 108 (e.g., using the listener 116) then decrypts the encrypted session key using a private key of the access point 108 to establish a session key for secure communications between the client device 126 and the domains 110 via the access point 108. The secure communications between the client device 126 and the access point 108 are represented in the illustrated example of FIG. 1 as data traffic 132. For instance, the data traffic 132 represents a request for data from subdomain 206 that is routed from proxy 204(1) via the access point 108 to the client device 126, as defined by the certificate 118 and enforced by the access point 108 (e.g., using the listener 116).

In implementations, data is communicated among the computing device 102, the access point 108, and the client device 126 via network 134. The network 134 is representative of any suitable communication architecture configured to connect the computing device 102 to the access point 108 and/or to connect the client device 126 to the access point 108. For instance, the network 134 is representative of a local area network, a wide area network, the Internet, and so forth.

In some examples, such as for anycast IP addresses, an IP address may not be specific to a geographic location. A CDN may use an anycast IP address to distribute content to different geographic locations, such that when a client device sends a request for content, an anycast IP address may direct the request to a nearest CDN node, or access point 108. Distributing content to different geographic locations using anycast IP address techniques may reduce latency and improve overall delivery speed for the content.

In some examples, the certificate management system 104 may cause the graph module 120 to generate a modified access point graph 122 for an anycast IP address. For an example of a modified access point graph 122 (e.g., a modified access point graph relative to the access point graph 122 depicted in FIG. 2), consider FIG. 3.

FIG. 3 depicts an example 300 of a modified graph of domain relationship data used by the certificate management system 104 to generate a certificate 118 for a network address 302 and/or an access point 108. In the illustrated example 300, the domain relationship data 106 may be an example of the domain relationship data 106 as described with reference to FIG. 2. The certificate management system 104 may use the domain relationship data 106 to generate the access point graph 122.

The access point graph 122 may include one or more nodes representative of records 304, including a record 304(1)-(X), where X is any integer value. In some examples, a record 304 may be representative of the relationship between respective domains 110 and subdomains 112, subdomains 206, and/or subdomains 114. A record 304 may have one or more different types (e.g., a record type 306) and corresponding functionalities. For example, a record 304 may be an address record type that maps a domain name to an IP address, such as a network address 302 or other IP address associated with the access point 108. Additionally, or alternately, a record 304 may be a canonical name (CNAME) record type may represent an alias relationship between domains. The certificate management system 104 may use CNAME records for creating subdomains, including the subdomains 112, subdomains 206, and/or subdomains 114 as described with reference to FIG. 2. The access point graph 122 may include a label indicating a record type 306 of a record 304.

In some examples, a record 304 may represent a domain with a defined domain type. For example, the record 304 may represent a root domain. In some examples, there may be a defined set of criteria for controlling data transfer between a root domain and a device. For example, a root domain may not be accessed via an access point 108, or other intermediate component or system, and may instead be directly linked to a network address 302. However, the certificate management system 104 may implement access points 108, proxies, CDN providers, among other systems and components, for transferring data between a domain and a device requesting the data. Thus, to ensure the root domain remains directly linked to the network address 302, the certificate management system 104 may introduce a record with a new record type 306, referred to as an alias record type. An alias record type may indicate to the certificate generation module 124 that the record 304 is a version of, or points to, a record 304 that is representative of a root domain. By creating an alias record type, the certificate management system 104 may utilize existing infrastructure, including component or systems, to generate certificates for a record 304 that is representative of a root domain. For example, the certificate management system 104 may utilize the access point graph 122, including one or more relationships between a network address 302, an access point 108, and/or one or more records 304 to generate a certificate.

To generate a certificate, the certificate generation module 124 may traverse the access point graph 122 to determine relationship information between the network address 302, the access point 108, and one or more records 304. The certificate generation module 124 may use the relationship information to generate the certificate, as described with reference to FIGs. 1 and 2. In some examples, the certificate generation module 124 may generate a certificate that includes the record 304 indicating at least one domain and one or more subdomains.

In some cases, multiple providers may serve a domain, including a CDN and one or more other providers (e.g., entities other than a CDN). The certificate management system 104 may control data transfer between the domain and a device based on the certificate. For example, the certificate management system 104 may determine whether a certificate is valid (e.g., not expired or revoked, and includes matching keys or signatures) prior to transferring data between a domain and a device. If the certificate is valid, then the certificate management system 104 delivers the data. If the certificate is invalid, then the certificate management system 104 may not deliver the data. Instead, the certificate management system 104 may generate a new certificate, may inform a device that the certificate is not valid, or the like.

In some cases, the certificate management system 104 may determine a network address 302 includes, or is otherwise related to, an anycast IP address. The certificate management system 104 may assign an access point type 308 to the access point 108. For example, if the certificate management system 104 determines the network address 302 and/or the access point 108 relates to an anycast IP address, then the certificate management system may assign as an anycast access point type to the access point 108. In some other cases, the certificate management system 104 may determine a network address 302 does not include, or is not otherwise related to, an anycast IP address and may assign an alternative access point type to the access point 108. An example of an alternative access point type includes, but is not limited to, a DNS access point. The access point graph 122 may include a labeled or assigned access point type 308 (e.g., the anycast access point type, or another access point type 308), in addition to a node representing the access point 108.

In some examples, such as if an access point 108 is labeled as an anycast access point type, then a CDN provider may verify the validity of a certificate for the access point 108. For example, the CDN provider may request for the certificate generation module 124 to generate the certificate based on receiving a request to access data at a domain indicated by a record 304 (e.g., a record 304(1)-(X)). The CDN provider and/or the certificate generation module 124 may determine the domain corresponds to an anycast IP address. The CDN provider may receive the request to access the data from a geographic location from which the domain is accessible (e.g., geographic locations designated for the anycast IP address). The CDN provider may perform the certificate validation for the access point 108 (e.g., for an anycast IP address) due to the network address being accessible from multiple different geographic locations. If the certificate is valid, the CDN provider may indicate that data transfer between a device and the domain is permitted.

As noted above, the certificate management system 104 is configured to update the certificate 118 for the access point 108 in an ongoing manner, such as at defined intervals, in response to changes in the domain relationship data 106, or combinations thereof. For instance, in response to a configuration change associated with the access point 108, the certificate management system 104 receives updated domain relationship data 106 from the listener 116.

In accordance with the techniques described herein, a change to the domain relationship data 106 occurs in response to certain services and/or data associated with a domain or subdomain being hosted by a different infrastructure (e.g., an origin server 202 or a proxy 204), merged to a common infrastructure, allocated to a different access point, combinations thereof, and so forth.

As a specific example, a change in domain relationship data 106 is detected in response to merging different services for a web application associated with one or more domains that were previously associated with multiple access points to a common access point (e.g., access point 108). Such merging is commonly used when implementing an application programming interface as an access point 108 to facilitate data communication for different aspects of a web service application, when a single-sign on is implemented to perform authentication at a single access point 108, when locally hosted services are offloaded to a CDN, when a service mesh is implemented by a single access point 108 to provide load balancing and fault tolerance, and so forth.

As another example, a change to the domain relationship data 106 occurs in response to allocation of different domains 110, or subdomains thereof, that were previously associated with the access point 108 to a different access point. In implementations, allocating services and/or data associated with a domain or subdomain is commonly performed to provide scalability, fault isolation, security, geographic distribution, regulatory compliance, and service-specific optimizations. For instance, as web service applications grow, some services may require more resources than others and allocating different access points for each service avoids bottlenecks at a given access point. Similarly, allocation among multiple access points mitigates problems in the event of failure or performance issue at a given access point, reduces latency, enables different access points to cater towards different regulatory guidelines, and so forth. As yet another example, a change to the domain relationship data 106 occurs in response to expiration of the certificate 118.

In response to receiving updated domain relationship data 106 for the access point 108 (e.g., based on a change in the domain relationship data 106 that was previously used to generate the access point graph 122), the certificate management system 104 causes the graph module 120 to generate a modified access point graph 122. For an example of a modified access point graph 122 (e.g., a modified access point graph relative to the access point graph 122 depicted in FIG. 2), consider FIG. 3.

FIG. 4 depicts an example 400 of a modified graph of domain relationship data used by the certificate management system 104 to generate an updated certificate 118 for the access point 108. In the illustrated example 400, the domain relationship data 106 represents changes to the domain relationship data 106 depicted in the illustrated example 200 of FIG. 2 and/or the domain relationship data 106 depicted in the illustrated example 300 of FIG. 3. Specifically, the example 400 reflects how the origin server 202 and the subdomain 112(2) are no longer associated with the access point 108. The example 400 further represents how the domain 110(1) and its subdomains 112(1)-(X), excluding subdomain 112(2), are now routed via the proxy 204(1) (e.g., instead of the origin server 202 as previously indicated in FIG. 2). The certificate generation module 124 uses the modified access point graph 122 depicted in FIG. 4 to generate a new certificate 118 for the access point 108, which replaces any certificate previously used by the access point. Thus, while a certificate generated from the access point graph 122 of FIG. 2 would include entries for the subdomain 112(2) and the origin server 202, an updated certificate generated form the modified access point graph 122 of FIG. 4 would not include entries for the subdomain 112(2) and the origin server 202. In this manner, the certificate management system 104 generates certificates for the access point 108 in an ongoing manner responsive to changes in the domain relationship data 106 for the access point 108, thus ensuring that the access point 108 includes a certificate 118 that accurately represents the associated domain relationship data 106. The certificate 118 is thus useable to control traffic between a device and one or more domains via the access point 108 in a manner that avoids security vulnerabilities associated with wildcard entries of conventional certificates.

Although described herein in the context of generating a certificate for a single access point, the certificate management system is configured to generate certificates for any number of different access points in accordance with the described techniques.

An access point 108 may be assigned to a geographic region, such that the access point 108 provides connectivity to devices within the geographic region. For example, the access point 108 may receive one or more requests to access content (e.g., a web service application), and may route data communications related to the request, as described with reference to FIG. 1. In some cases, the geographic region may include at least one of a city, a state, a country, and/or a continent. The devices may access the content from different geographic locations within the region.

In some cases, the access point 108 may experience a disruption to network connectivity, may experience a compromise to security, or may experience an alternative disruption impacting operation of the access point 108. For example, a malicious actor may sever a network connection between the access point 108 and a network 134. Additionally, or alternatively, an environmental factor (e.g., weather, or other similar environmental factor) may cause the access point 108 to disconnect from a network 134. While the access point 108 is offline (e.g., disconnected), one or more devices within the geographic region served by the access point 108 may be unable to access content via the access point 108. The inability to access content via the access point 108 may result in communication delays, among other interruption of service for the devices.

An access point 108 may have one or more fallback options when an access point 108 loses network connectivity, referred to as fallback access points. The fallback access points may include access points assigned to related geographic regions, such as neighboring geographic regions and/or geographic regions that include the geographic region of the access point 108. For example, a fallback access point for an access point 108 assigned to a country may include an access point 108 assigned to a continent that includes the country and/or to a neighboring country. The fallback access point may receive and address content requests from devices in the geographic region of the access point 108 that is experiencing disruption to a network connection. However, the fallback access point may lack information for generation of a certificate for accessing the content. The information may include domain and subdomain information for the access point 108, as well as other relationship information (e.g., the domain relationship data 106 as described with reference to FIGs. 1 through 4).

Further, various content hosts implement CDN proxies to handle requests to access the content. A CDN proxy may distribute data across multiple servers located in various geographic locations. A device may connect to a network 134 via an access point 108 and send a request for content to a CDN proxy (e.g., via the access point 108). The CDN proxy may select a server to fulfill the request based on a set of criteria, such as proximity of the device to the server, a traffic load at the server of content requests, and availability of the content at the server. The selected server retrieves the content and delivers the content back to the device over the network and via the access point 108. The use of CDN proxies may further complicate the certificate generation procedure for accessing the content.

Thus, the certificate management system 104 may further modify the access point graph 122 described with reference to FIGs. 2, 3, and 4 to include fallback access point information. For an example of a modified access point graph 122 (e.g., a modified access point graph relative to the access point graph 122 depicted in FIGs. 2, 3, and 4), consider FIGs. 5 and 6.

FIG. 5 depicts an example 500 of a modified graph of domain relationship data used by the certificate management system 104 to generate an updated certificate 118 for an access point 108 that experiences a disruption impacting content access (e.g., loss of a network connection). Specifically, the example 500 depicts a relationship between an access point 108 and one or more fallback access points 502. In some cases, a fallback access point 502 may be an example of an access point 108.

In the illustrated example 500, the domain relationship data 106 may be an example of the domain relationship data as described with reference to FIGs. 2, 3, and 4. For example, the domain relationship data may include information describing an association between the access point 108 and at least one domain. The example 500 may implement, or be implemented by, the access point graph 122 as described with reference to FIGs. 2, 3, and 4. For example, although not illustrated, the access point graph 122 may include one or more relationships between proxies 204, domains 110, subdomains 112, subdomains 114, subdomains 206, network addresses 302, and/or records 304.

The example 500 represents a hierarchy of fallback access points 502 and the relationships between the fallback access points 502 and an access point 108. For example, the access point 108 may have multiple fallback access points 502, including fallback access points 502(1)-(7). The certificate generation module 124 uses the modified access point graph 122 depicted in FIG. 5 to generate a certificate 118 for the access point 108, such as in the event that a security of the access point 108 is compromised and/or a network connection at the access point 108 is disrupted.

In some examples, the graph includes nodes that represent the access points (e.g., the access point 108 and the fallback access point 502) and edges that connect various nodes to model relationships between the access points. If the access point 108 experiences conditions that cause delays or inability for the access point 108 to access content, then one or more fallback access points 502 may take over serving the requests that the access point 108 previously monitored. In some examples, the certificate generation module 124 may use the graph to generate certificates for a fallback access point 502 that takes over for the access point 108. For example, the certificate generation module 124 may include information describing associations between the access point 108 and one or more fallback access points 502 in addition to associations between network addresses 302, access points 108, subdomains, domains, and records as described with reference to FIGs. 2, 3, and 4.

As illustrated in the example 500, if an access point 108 becomes unavailable (e.g., a network connection status changes to unavailable), then requests sent to the access point 108 may instead be addressed by one of the fallback access point 502(1), the fallback access point 502(2), or the fallback access point 502(3). Which of the fallback access points 502 (e.g., of the fallback access point 502(1), the fallback access point 502(2), or the fallback access point 502(3)) handles the request may depend on an availability of the fallback access points 502 and/or a connection status of the fallback access points 502. For example, if the access point 108 loses network connection and/or security of the access point 108 is compromised, then other access points 108 may experience similar connectivity and/or security issues. The connection status may indicate a change in connectivity based on a traffic speed of data exchanged at the access point 108 and/or a network connection status of the access point 108 (e.g., connected or disconnected from a network 134).

In some cases, a certificate generation module 124 may traverse the access point graph 122 to detect, or determine, a node (e.g., and corresponding fallback access point 502) that is adjacent to a node representative of the access point 108. A node that is adjacent to the node representative of the access point 108 may be a node that is directly connected via an edge to the access point 108. If the fallback access point 502(1), the fallback access point 502(2), and the fallback access point 502(3) are unable to handle the requests sent to the access point 108, then the fallback access point 502(5), the fallback access point 502(6), or the fallback access point 502(7) may handle the requests. The fallback access point 502(5) or the fallback access point 502(6) may handle any requests the fallback access point 502(3) is unable to handle. Similarly, the fallback access point 502(7) may handle requests the fallback access point 502(4) is unable to handle.

In some examples, at least one of the fallback access points 502(1)-(7) may be a datacenter. The datacenter may have a relatively strong network connection and security system, and therefore may be less likely to experience a disruption to a network connection and/or experience security breaches than other types of fallback access points 502 (e.g., other network devices). Thus, in some cases, a last fallback access point 502 for one or more access points 108 may be a datacenter. For example, if an access point 108 located in a city experiences a disruption impacting service to one or more devices, then a fallback access point 502 may be an access point 108 assigned to a country including the city. If the access point 108 assigned to the country including the city also experiences a disruption impacting service to the one or more devices, then a fallback access point 502 may be an access point 108 assigned to a continent including the country. The access point 108 assigned to the continent may be a datacenter.

In some examples, the relationship between a domain and the access points in the example 500 may be based on a geographic location of the access point 108. If a device is requesting access to content with an associated domain, then an initial, or serving, access point 108 is assigned based on a geographic location of the access point 108 relative to a geographic location of the device. For example, if the device is located in a city, then the access point 108 may be an access point 108 assigned to serve requests originating from within the city. In some cases, the fallback access points 502 are ordered and assigned based on a proximity of the geographic location of the access point 108 to the geographic locations of the fallback access points 502. For example, a fallback access point 502 may be an access point 108 assigned to a geographic location that includes the geographic location of the access point 108 initially assigned to serve a request for content (e.g., an access point 108 assigned to a country including a city assigned to the initial access point 108).

Once the certificate generation module 124 traverses the access point graph 122 and selects a fallback access point 502 to serve a request for content, then the certificate generation module 124 may use a relationship between one or more domains, subdomains, the access point 108, and the fallback access point 502 to generate the certificate. The access point graph 122 may represent relationships between the fallback access points 502 (e.g., child nodes in the access point graph 122) and the access point 108 (e.g., a root node in the access point graph 122), while a portion of the access point graph 122 illustrated and described with reference to FIGs. 2, 3, and 4 may represent relationships between the domain and the access point 108. A child node in the access point graph 122 may be a node that is later in the graph. For example, the fallback access points 502(1)-(7) are child nodes of the access point 108, the fallback access point 502(5) and the fallback access point 502(6) are child nodes of the fallback access point 502(3), and the fallback access point 502(7) is a child node of the fallback access point 502(4).

In some examples, different fallback access points 502 may experience different operating conditions. For example, a fallback access point 502(1) may have different operating conditions than a fallback access point 502(2) or a fallback access point 502(3). The operating conditions may include one or more of a volume or numerical quantity of data transmissions (e.g., data or communication traffic) experienced by a fallback access point 502, a speed of data transmissions (e.g., latency) experienced by a fallback access point 502, a strength of a security of a fallback access point 502, or a geographic location of a fallback access point 502 relative to an access point 108, among others.

Thus, the certificate management system 104 may further modify the access point graph 122 described with reference to FIG. 5 to include dynamic fallback access point information. For an example of a modified access point graph 122 (e.g., a modified access point graph relative to the access point graph 122 depicted in FIG. 5), consider FIG. 6.

FIG. 6 depicts an example 600 of a modified graph of domain relationship data used by the certificate management system 104 to generate an updated certificate 118 for an access point 108 that experiences a disruption impacting content access (e.g., loss of a network connection). Specifically, the example 600 depicts an alias relationship 602 between access points 108 (e.g., access points 108(1)-(3)), as well as a relationship between the access points 108(1)-(3) and one or more fallback access points 502. In some cases, a fallback access point 502 may be an example of an access point 108.

In the illustrated example 600, the domain relationship data 106 may be an example of the domain relationship data as described with reference to FIGs. 2, 3, 4, and 5. For example, the domain relationship data may include information describing an association between the access point 108, at least one domain, a subdomain, and/or one or more fallback access points 502. The example 600 may implement, or be implemented by, the access point graph 122 as described with reference to FIGs. 2, 3, 4, and 5. For example, although not illustrated, the access point graph 122 may include one or more relationships between proxies 204, domains 110, subdomains 112, subdomains 206, subdomains 114, network addresses 302, and records 304.

The example 600 represents a hierarchy of fallback access points 502 and the relationships between the fallback access points 502 and one or more of the access points 108(1)-(3). For example, the access points 108(1)-(3) may have multiple fallback access points 502, including fallback access points 502(1)-(6). The certificate generation module 124 uses the modified access point graph 122 depicted in FIG. 6 to generate a certificate 118 for an access point 108, such as in the event that a security of the access point 108 is compromised and/or a network connection at the access point 108 is disrupted.

In some examples, the relationship between the access points 108(1)-(3) may be dynamic, such that there is no formal relationship between an access point 108 of the access points 108(1)-(3) and fallback access points 502 until a change in connectivity occurs, where the change in connectivity may be related to a network connection status of the access point 108, a security breach at the access point 108, and/or a speed of data traffic at the access point 108, among other factors. If one of the access points 108(1)-(3) experiences a disruption to service (e.g., the change in connectivity), then the certificate management system 104 may dynamically select an access point 108 (e.g., one of the access points 108(1)-(3)). An alias relationship 602 may define the relationships between the access points 108(1)-(3) to provide for the dynamic selection of the access points 108.

In some examples, the certificate management system 104 may select an access point 108 according to a set of criteria. The criteria may include, but is not limited to, a threshold volume (e.g., numerical quantity, number, or amount over a duration) of data transmissions experienced by one or more fallback access points 502, a threshold speed of data transmission experienced by one or more fallback access points 502, a threshold strength of security of one or more fallback access points 502, and a proximity of a geographic location of one or more fallback access points 502 relative to an access point 108 of the access points 108(1)-(3).

The certificate management system 104 may detect a service disruption for one of the access points 108 with an alias relationship 602. For example, the access point 108(1), the access point 108(2), and/or the access point 108(3) may experience a service disruption. The certificate management system 104 may analyze information related to the service disruption to determine a cause, or reason, for the service disruption. For example, the certificate management system 104 may receive information via the network 134 that indicates an access point 108 has lost a network connection, has experienced a security breach, is experiencing a relatively high data traffic load causing delays in servicing requests for content, or the like.

In some examples, the certificate management system 104 may receive information related to current operation of the access points 108 and/or fallback access points 502 that are not experiencing the disruption of service. The information may include one or more of a volume (e.g., numerical quantity, number, or amount over a duration) of data transmissions experienced by the access points 108 and/or fallback access points 502, a speed of data transmissions experienced by the access points 108 and/or fallback access points 502, a strength of a security of the access points 108 and/or fallback access points 502, or a geographic location of the access points 108 and/or fallback access points 502 relative to the access point 108 experiencing the service disruption, among others.

The certificate management system 104 may compare the information related to current operation of the access points 108 and fallback access points 502 to the set of criteria for selecting an access point 108, including a set of fallback access points 502. In some cases, the certificate management system 104 may select an access point 108 from the access points 108(1)-(3) with one or more fallback access points 502 with a volume of data transmissions that satisfies (e.g., is less than) a threshold volume of data transmissions experienced by the fallback access points 502, a speed of data transmission that satisfies (e.g., is greater than) a threshold speed of data transmission experienced by the fallback access points 502, a strength of security that satisfies (e.g., is greater than) a threshold strength of security of the fallback access points 502, and/or a proximity of a geographic location of one or more fallback access points 502 relative to an access point 108 of the access points 108(1)-(3) that satisfies (e.g., greater than or less than) a threshold proximity. For example, the certificate management system 104 may select an access point 108 with fallback access points 502 that are experiencing relatively low data traffic (e.g., below a threshold value) and/or experience a relatively high speed of data transmission (e.g., above a threshold value) to ensure that the fallback access points 502 have the processing bandwidth to service one or more devices previously serviced by an access point 108 experiencing the service disruption.

The certificate management system 104 may additionally, or alternatively, consider the type of service disruption in view of the information related to current operation of the access points 108 when selecting the access point 108 and/or fallback access points 502. For example, the certificate management system 104 may select an access point 108 with fallback access points 502 having a strength of security that satisfies a strength of security threshold if the type of disruption of service is a security breach.

In some examples, the certificate management system 104 may select an access point 108 with fallback access points 502 with geographic locations relatively close (e.g., within a proximity) to the access point 108 experiencing the disruption of service. In some cases, the fallback access points 502 may be ordered in the access point graph 122 according to a proximity. In some other examples, the certificate management system 104 may select an access point 108 with fallback access points 502 with geographic locations relatively far from the access point 108 experiencing the disruption of service (e.g., to avoid selecting a fallback access point 502 that is experiencing a same disruption of service). For example, if the disruption of service is due to an event (e.g., natural disaster or cyber-attack) impacting multiple geographic locations, then the certificate management system 104 may select an access point 108 with fallback access points 502 relatively far from the access point 108 experiencing the disruption of service.

In some examples, the certificate generation module 124 may use the graph to generate certificates for a fallback access point 502 that takes over for an access point 108 according to the selection. For example, the certificate generation module 124 may include information describing associations between the access point 108 and one or more fallback access points 502 in addition to associations between the access point 108, network addresses, records, subdomains, and domains as described with reference to FIGs. 2, 3, and 4.

Having considered example systems and techniques for generating access point certificates, consider now example procedures to illustrate aspects of the techniques described herein.

### Example Procedures

The following discussion describes techniques that are configured to be implemented utilizing the previously described systems and devices. In general, functionality, features, and concepts described in relation to the examples above and below are employable in the context of the example procedures described in this section. Further, functionality, features, and concepts described in relation to different figures and examples in this document are interchangeable among one another and are not limited to implementation in the context of a particular figure or procedure. Moreover, blocks associated with different representative procedures and corresponding figures herein are configured to be applied together and/or combined in different ways.

Thus, individual functionality, features, and concepts described in relation to different example environments, devices, components, figures, and procedures herein are useable in any suitable combinations and are not limited to the combinations represented by the enumerated examples in this description. Aspects of each of the procedures are configured for implementation in hardware, firmware, software, or a combination thereof. The procedures are shown as a set of blocks that specify operations performed by one or more devices and are not necessarily limited to the orders shown for performing the operations by the respective blocks. In portions of the following discussion, reference is made to FIGS. 1-3.

FIG. 7 depicts a procedure 700 in an example implementation in which a certificate management system generates a certificate for an access point based on a graph of domain relationship data for the access point.

Domain relationship data describing an organization of one or more domains associated with an access point is received (block 702). The certificate management system 104, for instance, receives domain relationship data 106 from a listener 116 of the access point 108.

A graph is then generated based on the domain relationship data (block 704). The certificate management system 104, for instance, implements the graph module 120 to generate an access point graph 122 for the access point 108. A determination is made as to whether there is a change in domain relationship data for the access point (block 706). The certificate management system 104, for instance, identifies whether new domain relationship data 106 for the access point 108 is received. In some implementations, the certificate management system 104 periodically queries the access point 108 for domain relationship data 106. Alternatively or additionally, the certificate management system 104 receives the domain relationship data 106 automatically (e.g., without requesting that the domain relationship data 106 be communicated or otherwise provided to the certificate management system 104). A change in the domain relationship data may include a connectivity status change for an access point 108.

In response to detecting a change in the domain relationship data 106 (e.g., a "Yes" determination at block 706), operation of the procedure 700 returns to block 702, where updated domain relationship data 106 is received by the certificate management system 104. Alternatively, in response to no change detected to the domain relationship data 106 (e.g., a "No" determination at block 706), a certificate is generated for the access point based on the graph (block 708). The certificate generation module 124, for instance, generates the certificate 118 using the access point graph 122 generated by the graph module 120. After and/or during generation of the certificate 118, the certificate management system 104 continues to monitor for a change in the domain relationship data 106, as indicated by the dashed arrow returning to block 706 from block 708, and operation of the procedure 700 continues from block 706 upon a change in the domain relationship data 106.

After generating the certificate, traffic between a device and the one or more domains via the access point is controlled using the certificate (block 710). The certificate management system 104, for instance, communicates the certificate 118 to the access point 108. The listener 116 of the access point 108 then uses the certificate 118 to authenticate an access request 130 by the client device 126 and/or the application 128 and control network 134 between the domains 110 and/or subdomains thereof, via the access point 108. While controlling traffic using the certificate 118, the certificate management system 104 continues to monitor for a change in the domain relationship data 106, as indicated by the dashed arrow returning to block 706 from block 710, and operation of the procedure 700 continues from block 706 upon a change in the domain relationship data 106.

FIG. 8 depicts a procedure 800 in an example implementation in which a certificate generated by a certificate management system is used to control data communication via an access point.

To begin, a request is received from a device to access a domain via an access point (block 802). The access point 108, for instance, receives an access request 130 from the client device 126 to access one or more of the domains 110, one or more of the subdomains 112, one or more of the subdomains 114, or combinations thereof. A certificate associated with the access point is identified (block 804). The listener 116 of access point 108, for instance, identifies certificate 118 generated by the certificate management system 104 for the access point 108.

A determination is then made as to whether the domain is included in the certificate (block 806). The one or more of the domains 110, one or more of the subdomains 112, one or more of the subdomains 114, or a combination thereof is compared with entries of the certificate 118 as generated by the certificate generation module 124 based on the access point graph 122 for the access point 108. In response to identifying that the domain is not included in the certificate (e.g., a "No" determination at block 806), access by the device is denied (block 808). The listener 116, for instance, prohibits the client device 126 from accessing the requested domain via the access point 108.

Alternatively, in response to the domain being included in the certificate (e.g., a "Yes" determination at block 806), a determination is made as to whether the device is authenticated via the certificate (block 810). The listener 116, for instance, communicates the certificate 118 to the client device 126 as part of a security handshake and performs a hostname verification with the client device 126 to establish a secure data communication session between the client device 126 and the access point 108. In response to failing to authenticate the device using the certificate (e.g., a "No" determination at block 810), operation of the procedure 800 returns to block 808 and access by the device is denied.

Alternatively, in response to authenticating the device using the certificate (e.g., a "Yes" determination at block 810), data is communicated between the device and the domain via the access point (block 812). The listener 116, for instance, controls data traffic 132 between the client device 126 and the requested one or more domains 110, one or more of the subdomains 112, one or more of the subdomains 114, or a combination thereof based on the certificate 118 (e.g., according to communication pathways represented by edges that connect nodes of the access point graph 122 from which the certificate 118 is generated).

Having described example procedures in accordance with one or more implementations, consider now an example system and device to implement the various techniques described herein.

### Example System and Device

FIG. 9 illustrates an example system 900 that includes an example computing device 902, which is representative of one or more computing systems and/or devices that implement the various techniques described herein. This is illustrated through inclusion of the certificate management system 104. The computing device 902 is configured, for example, as a service provider server, as a device associated with a client (e.g., a client device), as an on-chip system, and/or as any other suitable computing device or computing system.

The example computing device 902 as illustrated includes a processing system 904, one or more computer-readable media 906, and one or more I/O interface 908 that are communicatively coupled, one to another. Although not shown, the computing device 902 is further configured to include a system bus or other data and command transfer system that couples the various components, one to another. A system bus includes any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 904 is representative of functionality to perform one or more operations using hardware. Accordingly, the processing system 904 is illustrated as including hardware element 910 that are configurable as processors, functional blocks, and so forth. For instance, hardware element 910 is implemented in hardware as an application specific integrated circuit or other logic device formed using one or more semiconductors. The hardware elements 910 are not limited by the materials from which they are formed, or the processing mechanisms employed therein. For example, processors are alternatively or additionally comprised of semiconductor(s) and/or transistors (e.g., electronic integrated circuits (ICs)). In such a context, processor-executable instructions are electronically executable instructions.

The computer-readable storage media 906 is illustrated as including memory/storage 912. The memory/storage 912 represents memory/storage capacity associated with one or more computer-readable media. The memory/storage 912 is representative of volatile media (such as random-access memory (RAM)) and/or nonvolatile media (such as read only memory (ROM), Flash memory, optical disks, magnetic disks, and so forth). The memory/storage 912 is configured to include fixed media (e.g., RAM, ROM, a fixed hard drive, and so on) as well as removable media (e.g., Flash memory, a removable hard drive, an optical disc, and so forth). In certain implementations, the computer-readable media 906 is configured in a variety of other ways as further described below.

Input/output interface(s) 908 are representative of functionality to allow a user to enter commands and information to computing device 902 and allow information to be presented to the user and/or other components or devices using various input/output devices. Examples of input devices include a keyboard, a cursor control device (e.g., a mouse), a microphone, a scanner, touch functionality (e.g., capacitive, or other sensors that are configured to detect physical touch), a camera (e.g., a device configured to employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 902 is representative of a variety of hardware configurations as further described below to support user interaction.

Various techniques are described herein in the general context of software, hardware elements, or program modules. Generally, such modules include routines, programs, objects, elements, components, data structures, and so forth that perform particular tasks or implement particular data types. The terms "module," "functionality," and "component" as used herein generally represent software, firmware, hardware, or a combination thereof. The features of the techniques described herein are platform-independent, meaning that the techniques are configured for implementation on a variety of commercial computing platforms having a variety of processors.

An implementation of the described modules and techniques are stored on or transmitted across some form of computer-readable media. The computer-readable media include a variety of media that is accessible by the computing device 902. By way of example, and not limitation, computer-readable media includes "computer-readable storage media" and "computer-readable signal media."

"Computer-readable storage media" refers to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable, and non-removable media and/or storage devices implemented in a method or technology suitable for storage of information such as computer readable instructions, data structures, program modules, logic elements/circuits, or other data. Examples of computer-readable storage media include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information for access by a computer.

"Computer-readable signal media" refers to a signal-bearing medium that is configured to transmit instructions to the hardware of the computing device 902, such as via a network. Signal media typically embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 910 and computer-readable media 906 are representative of modules, programmable device logic and/or fixed device logic implemented in a hardware form that is employed in some embodiments to implement at least some aspects of the techniques described herein, such as to perform one or more instructions. Hardware, in certain implementations, includes components of an integrated circuit or on-chip system, an application-specific integrated circuit (ASIC), a field-programmable gate array (FPGA), a complex programmable logic device (CPLD), and other implementations in silicon or other hardware. In this context, hardware operates as a processing device that performs program tasks defined by instructions and/or logic embodied by the hardware as well as a hardware utilized to store instructions for execution, e.g., the computer-readable storage media described previously.

Combinations of the foregoing are employed to implement various techniques described herein. Accordingly, software, hardware, or executable modules are implemented as one or more instructions and/or logic embodied on some form of computer-readable storage media and/or by one or more hardware elements 910. The computing device 902 is configured to implement instructions and/or functions corresponding to the software and/or hardware modules. Accordingly, implementation of a module that is executable by the computing device 902 as software is achieved at least partially in hardware, e.g., through use of computer-readable storage media and/or hardware elements 910 of the processing system 904. The instructions and/or functions are executable/operable by one or more articles of manufacture (for example, one or more computing devices 902 and/or processing systems 904) to implement techniques, modules, and examples described herein.

The techniques described herein are supported by various configurations of the computing device 902 and are not limited to the specific examples of the techniques described herein. This functionality is further configured to be implemented all or in part through use of a distributed system, such as over a "cloud" 914 via a platform 916 as described below.

The cloud 914 includes and/or is representative of a platform 916 for resources 918. The platform 916 abstracts underlying functionality of hardware (e.g., servers) and software resources of the cloud 914. The resources 918 include applications and/or data that is utilized while computer processing is executed on servers that are remote from the computing device 902. Resources 918 also include services provided over the Internet and/or through a subscriber network, such as a cellular or Wi-Fi network.

The platform 916 is configured to abstract resources and functions to connect the computing device 902 with other computing devices. The platform 916 is further configured to abstract scaling of resources to provide a corresponding level of scale to encountered demand for the resources 918 that are implemented via the platform 916. Accordingly, in an interconnected device embodiment, implementation of functionality described herein is configured for distribution throughout the system 900. For example, in some configurations the functionality is implemented in part on the computing device 902 as well as via the platform 916 that abstracts the functionality of the cloud 914.

### Conclusion

Although the invention has been described in language specific to structural features and/or methodological acts, the invention defined in the appended claims is not necessarily limited to the specific features or acts described. Rather, the specific features and acts are disclosed as example forms of implementing the claimed invention.

## Claims

1. A method comprising:
generating a graph defining relationships between a domain and a plurality of different access points, the plurality of different access points including a serving access point and one or more fallback access points, wherein the plurality of different access points is represented in the graph by a plurality of nodes;
generating upon detection of a change in connectivity of the serving access point, a certificate for accessing data via the domain based on the relationships between the domain and the one or more fallback access points; and
controlling access to the data using the certificate.

2. The method of claim 1, wherein the relationships between the domain and the plurality of different access points is based on a geographical location of the serving access point; wherein an order of the plurality of nodes in the graph may be based on a proximity of respective fallback access points to the geographical location of the serving access point.

3. The method of claim 1 or 2, wherein the detection of the change in connectivity is based on one or more of a traffic speed associated with the serving access point or a network connection status of the serving access point.

4. The method of any one of the preceding claims, further comprising:
traversing the graph to detect a node of the plurality of nodes corresponding to a fallback access point adjacent to a node of the plurality of nodes corresponding to the serving access point; and
determining, based on the graph, a relationship between the domain and the fallback access point, wherein the certificate is generated based on the relationship.

5. The method of any one of the preceding claims, wherein the one or more fallback access points are associated with one or more relationships between the domain and respective access points, the respective access points corresponding to child nodes of one or more nodes of the plurality of nodes.

6. The method of any one of the preceding claims, further comprising selecting a fallback access point from the one or more fallback access points based on one or more of a numerical quantity of data transmissions at the fallback access point, a geographic location of the serving access point, or a geographic location of the fallback access point;
wherein at least one fallback access point may be associated with a datacenter.

7. A method comprising:
generating a graph defining a relationship between a network address, an access point, and one or more records associated with at least one domain, the relationship based on the network address being accessed from a plurality of geographic locations;
generating a certificate for the network address based on the graph; and
controlling data transfer between the at least one domain and a device based on the certificate.

8. The method of claim 7, wherein the at least one domain is served by multiple providers that comprise a first provider hosted by an entity and a second provider hosted by a content delivery network that is different than the entity, wherein the first provider is represented in the graph by a first node and the second provider is represented in the graph by a second node;
wherein the method optionally further comprises permitting data transfer between the at least one domain and the device based on verifying, by the second provider, a validity of the certificate.

9. The method of claim 7 or 8, wherein the one or more records include an indication of one or more of the at least one domain or one or more subdomains associated with the at least one domain;
wherein generating the certificate may be based on receiving a request for the data transfer, the request received from at least one geographic location of the plurality of geographic locations.

10. The method of any one of claims 7 to 9, wherein the graph further comprises a plurality of nodes that represent the network address, the access point, and the at least one domain, wherein respective nodes of the plurality of nodes are connected by links representative of the relationship between the network address, the access point, and the at least one domain;
wherein the network address may be a virtual internet protocol address configured for access by at least one of a physical network interface or the device.

11. A method comprising:
generating a graph that defines a first relationship between a network address and a record associated with a domain and a second relationship between the network address and an alias record associated with the domain, the second relationship defined based on a type of the domain;
generating a certificate for accessing data via the domain based on at least one of the first relationship or the second relationship; and
controlling data transfer between the domain and a device based on the certificate.

12. The method of claim 11, wherein the graph further comprises a plurality of nodes that represent the network address, the record, and the alias record, wherein respective nodes of the plurality of nodes are connected by links representative of the first relationship and the second relationship.

13. The method of claim 12, wherein the certificate is generated based on the first relationship based on the network address and the record being adjacent nodes in the graph.

14. The method of any one of claims 11 to 13, wherein the certificate is generated based on the second relationship based on the network address and the record being separated by one or more nodes in the graph.

15. The method of any one of claims 11 to 14, wherein:
the type of the domain is a root domain; and
the alias record corresponds to the first relationship.
